# EUROPÄISCHE PATENTANMELDUNG

(11) **EP 1 424 185 A1**
(43) Veröffentlichungstag der Anmeldung: **02.06.2004**
(21) Anmeldenummer: 03027539.0
(22) Anmeldetag: 29.11.2003
(51) Int. Cl.: B29C 45/16, B29C 45/44, B29C 33/44

(54) **Spritzgiesswerkzeug und zugehöriges Verfahren**

(30) Priorität: 30.11.2002 DE 10255993
(71) Anmelder: Hachtel, Steffen, 73650 Winterbach (DE)
(72) Erfinder: Hachtel, Steffen, 73650 Winterback (DE)
(74) Vertreter: Möbus, Daniela, Dr.-Ing.

(57) **Zusammenfassung**

Die vorliegende Erfindung beschreibt ein Spritzgießwerkzeug (15) und ein zugehöriges Verfahren zum Spritzgießen eines Werkstücks (10), das aus mehreren Werkstückteilen (12,14), die Hinterschnitte (13) aufweisen, besteht. Es ist mindestens ein Schieber (29) mit mehreren unabhängig voneinander betätigbaren Schieberteilstücken (30,32,34) für das Formen der Hinterschnitte (13) und das Ausstoßen der Werkstückteile (10) vorgesehen.

## Beschreibung

Die Erfindung betrifft allgemein das Spritzgießen und insbesondere ein Spritzgießwerkzeug und das zugehörige Verfahren, mit dem ein Werkstück, das aus mehreren, jeweils mit Hinterschnitten versehenen Werkstückteilen besteht, mittels Spritzgießen gegossen werden kann.

Beim Spritzgießen wird der Werkstoff, beispielsweise Kunststoff, aus dem ein Werkstück hergestellt werden soll, in einem plastischen Zustand in eine Spritzgussform eingebracht, kann dort aushärten und wird dann aus der Spritzgussform ausgestoßen. Sollen Werkstücke, die aus unterschiedlichen Werkstückteilen und gegebenenfalls auch Materialien bestehen, durch Spritzguss hergestellt werden, so werden die unterschiedlichen Werkstückteile in verschiedenen Formnestern der Spritzgussform gleichzeitig oder nacheinander gegossen, wobei eine direkte Verbindung durch ein Anspritzen der unterschiedlichen Werkstückteile aneinander möglich ist.

Hinterschnitte stellen allgemein ein Problem beim Spritzgießen dar, da Werkstücke, die solche Hinterschnitte aufweisen, nach dem Erhärten des Werkstoffs nur schwer wieder aus der Spritzgussform ausgestoßen werden können. Um das Ausbilden der Hinterschnitte so zu ermöglichen, dass das Werkstück anschließend auch wieder ausgestoßen werden kann, werden bewegliche Bauteile in der Spritzgussform, so genannte Schieber, verwendet. Diese fahren in die Hinterschnitte ein und ermöglichen so später durch ein weiteres Vorfahren oder wieder Zurückfahren ein Ausstoßen des fertigen Werkstücks.

Bei Werkstücken, die aus verschiedenen Werkstückteilen, die Hinterschnitte aufweisen, zusammengesetzt sind, besteht das Problem, dass bei der Verwendung von Schiebern beim aufeinander folgenden Spritzen der Werkstückteile mit Formteilen für diese Werkstückteile kollidieren können.

Die vorliegende Erfindung stellt sich daher die Aufgabe, ein Spritzgießwerkzeug und ein Verfahren anzugeben, mit dem Werkstücke, die aus mehreren Werkstückteilen, die Hinterschnitte aufweisen, bestehen, hergestellt werden können.

Die gestellte Aufgabe wird erfindungsgemäß durch das Spritzgießwerkzeug, das die im Anspruch 1 angeführten Merkmale aufweist, und durch das Verfahren zum Spritzgießen, das die im Anspruch 7 angeführten Merkmale aufweist, gelöst. Die Unteransprüche zum Anspruch 1 bzw. zum Anspruch 7 geben bevorzugte Weiterbildungen an.

Beim erfindungsgemäßen Spritzgießwerkzeug sind ein oder mehrere Schieber mit mehreren getrennt betätigbaren Schieberteilstücken zum Formen und Ausstoßen vorgesehen. Dadurch können auch bei einem Werkstück, das aus unterschiedlichen Werkstückteilen, die jeweils unterschiedliche Hinterschneidungen aufweisen, besteht, diese mehreren Schieberteilstücke gezielt bei diesen unterschiedlichen Hinterschneidungen eingesetzt werden, weil sie getrennt betätigbar sind. Dadurch können Kollisionen der Schieberteilstücke mit Formteilen vermieden werden. Die Betätigung der Schieberteilstücke kann beispielsweise durch Schrägbolzen oder über Kernzüge, über die die Schieberteilstücke hydraulisch oder pneumatisch betätigt werden können, erfolgen.

Aus Gründen des einfachen und kontrollierteren Ausstoßens ist es dabei vorteilhaft, wenn die unterschiedlichen Schieberteilstücke so angeordnet sind, dass sie in Bahnen gleicher Richtung verlaufen.

Um die mehreren Werkstückteile des Werkstücks zu gießen, weist das Spritzgießwerkzeug mehrere Formnester auf. In diesen Formnestern sind dann vorteilhafterweise unterschiedliche Schrägbolzen oder Kernzüge angeordnet, um so bei jedem Formnest die Möglichkeit zu haben, andere Schieberteilstücke zu betätigen. Dabei können die einzelnen Formnester aber mindestens zum Teil auch gleiche Schrägbolzen oder Kernzüge aufweisen, wenn gleiche Schieberteilstücke betätigt werden sollen.

In einer vorteilhaften Ausführungsform weist das Spritzgießwerkzeug, wenn ein Werkstück, das aus zwei einander entgegengesetzten Werkstückteilen gegossen werden soll, zwei Formnester auf, die um 180° entgegengesetzt zueinander angeordnet sind.

Beim erfindungsgemäßen Verfahren zum Spritzgießen eines mit Hinterschneidungen versehenen Werkstücks mit dem oben angegebenen Spritzwerkzeug wird zunächst in einem ersten Formnest der Spritzgussform ein erstes Werkstückteil gegossen, dann wird die Spritzgussform bis zu einem zweiten Formnest bewegt, in der ein zweites Werkstückteil gegossen wird, wobei es, um ein gesamtes zusammenhängendes Werkstück zu erhalten, so gegossen wird, dass ein Angießen an das bereits gegossene Werkstückteil erfolgt. Dieses Verfahrensschritte werden dann für weitere Formnester, die für weitere Werkstückteile vorgesehen sind, entsprechend fortgesetzt.

Besteht das Werkstück beispielsweise aus zwei einander entgegengesetzten Werkstückteilen, so kann die Spritzgussform vorteilhafterweise aus zwei Formnestern bestehen, die um 180° einander entgegengesetzt angeordnet sind. Der erste Werkzeugteil wird im ersten Formnest gegossen, dann wird die Spritzgussform um 180° gedreht und das zweite Werkstückteil im zweiten Formnest gegossen. In einer vorteilhaften Ausführungsform wird nach dem Gießen des ersten Werkstückteils dieses mittels eines oder mehreren Schieberteilstücken ausgestoßen, aber nur so weit, dass es noch im Formnest liegen bleibt, sodass es mit der Bewegung der Spritzgussform mitgeführt werden kann. Nach dem Gießen des zweiten Werkstückteils im zweiten Formnest wird dann das Werkstück insgesamt mittels mindestens eines anderen Schieberteilstücks aus der Spritzgussform endgültig ausgeschoben.

Die verschiedenen Werkstückteile des Werkstücks, das mit dem obigen Spritzgießwerkzeug und dem zugehörigen Verfahren hergestellt werden kann, können aus gleichen Materialien oder aus unterschiedlichen Materialien bestehen, sodass das erfindungsgemäße Spritzgießwerkzeug und das zugehörige Verfahren vorteilhafterweise auch bei Mehrkomponentenspritzgießverfahren zur Anwendung kommen können.

Ein Ausführungsbeispiel eines erfindungsgemäß ausgebildeten Spritzgießwerkzeugs zum Herstellen eines Werkstücks, das aus zwei Werkstückteilen besteht, wird nachfolgend anhand der beiliegenden Zeichnung erläutert. In den Zeichnungen sind gleiche Elemente in allen Zeichnungsfiguren mit den gleichen Bezugszahlen gekennzeichnet.

Es zeigen:
- Fig. 1: eine perspektivische Darstellung eines beispielhaften Werkstücks, das aus zwei Werkstückteilen besteht;
- Fig. 2: eine perspektivische Ansicht des Werkstücks aus Fig. 1 im montierten Zustand;
- Fig. 3: eine schematische Ansicht von oben auf die Spritzgießform zur Herstellung des Werkstücks aus Fig. 1;
- Fig. 4: einen schematischen Teilquerschnitt durch die Spritzgießform aus Fig. 3 im Bereich des Formnests für das erste Werkstückteil;
- Fig. 5: einen schematischen Teilquerschnitt durch die Spritzgießform aus Fig. 3 im Bereich des Formnests für das zweite Werkstückteil.

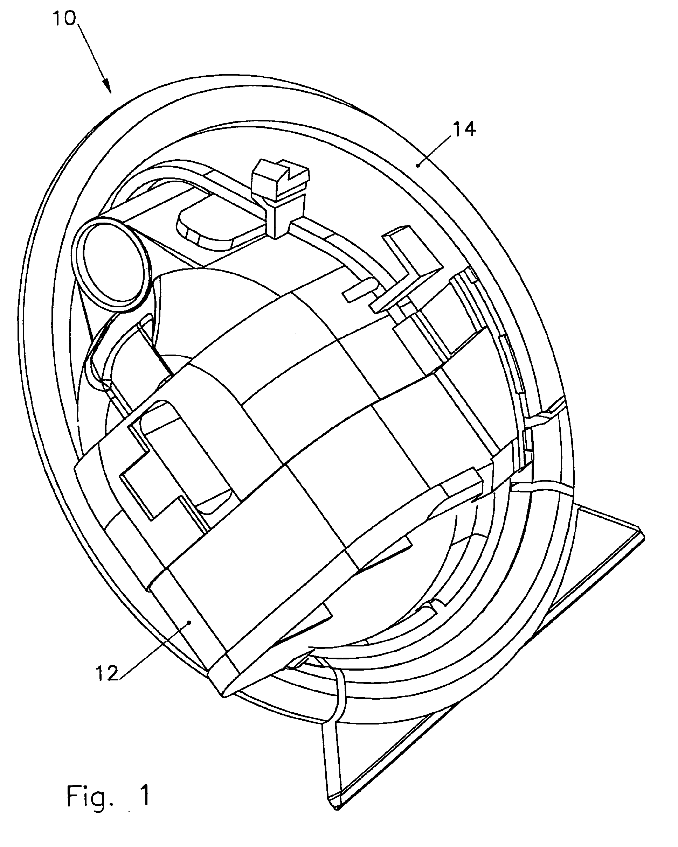

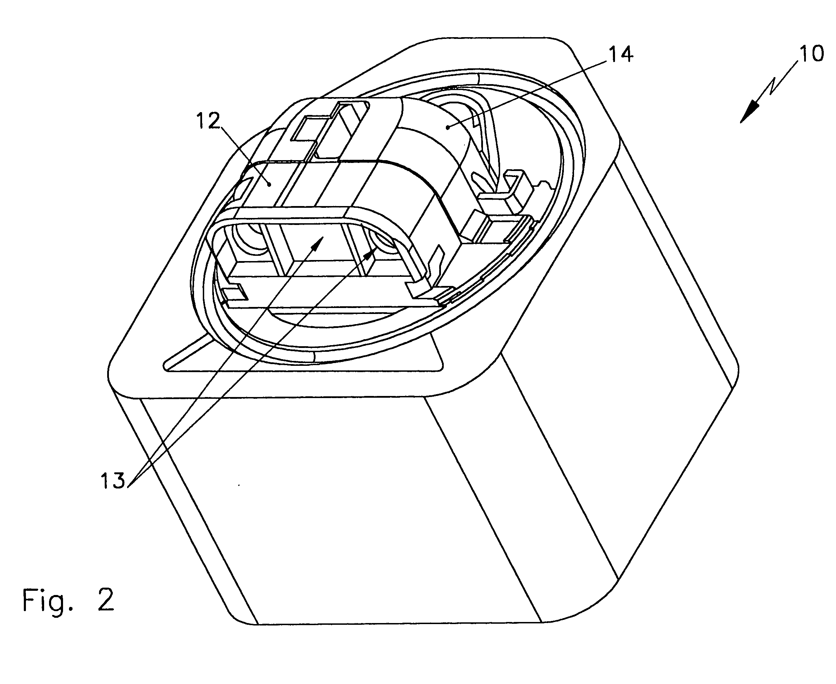

Fig. 1 zeigt eine perspektivische Darstellung eines beispielhaften Werkstücks 10, das aus einem ersten Werkstückteil 12 und einem zweiten Werkstückteil 14 besteht. Das Werkstück weist dabei in Fig. 2 sichtbare Hinterschnitte 13 auf.

Im konkreten Fall ist das Werkstück ein Kunststoffbauteil, und zwar ein Gehäuse, das in Zweischalentechnik ausgeführt ist.

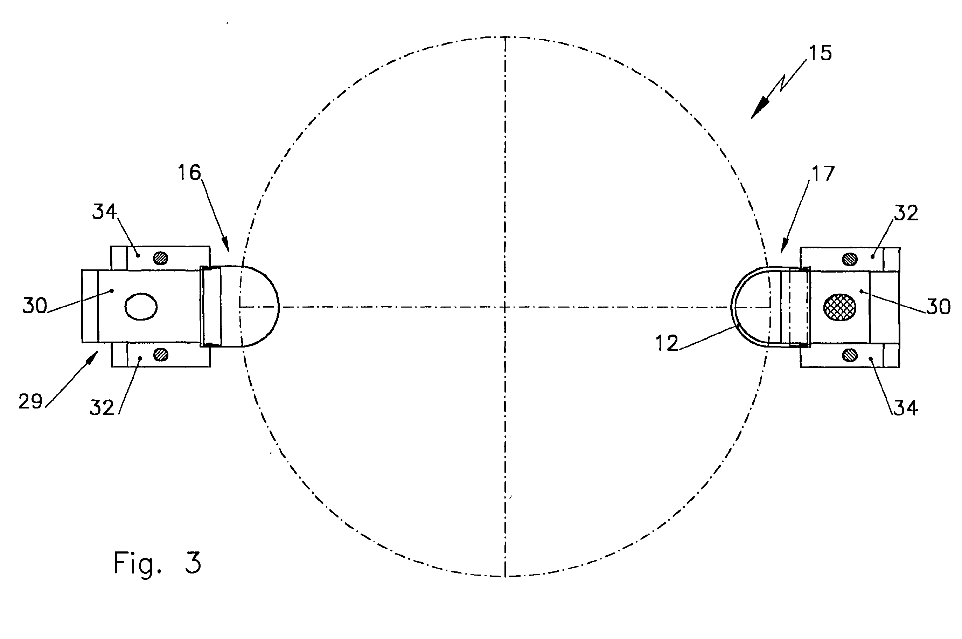

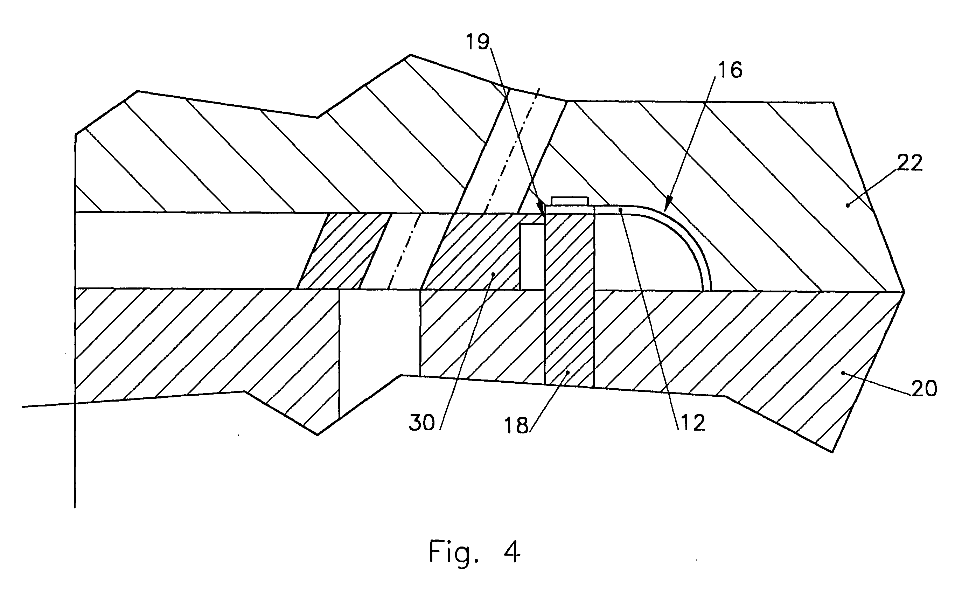

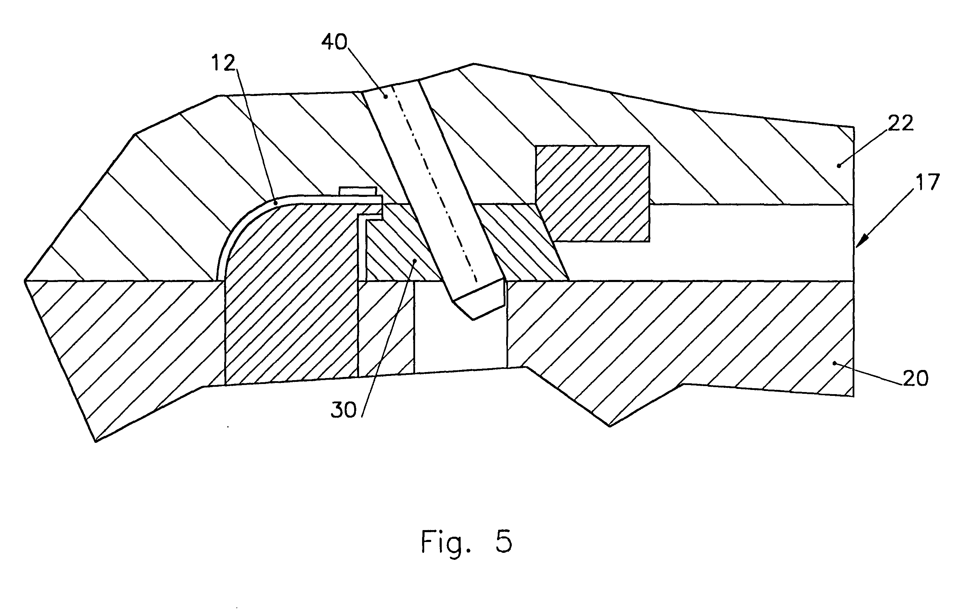

Fig. 3 zeigt in einer schematischen Ansicht von oben eine Spritzgießform 15 mit zwei um 180° auseinander liegenden Formnestern 16, 17 für die Werkstückteile 12 und 14. Zur Bildung der Hinterschnitte (Fig. 2) und zur Entformung des gesamten Werkstücks 10 ist ein in drei Teile 30, 32, 34 geteilter Schieber 29 vorgesehen, dessen Teile 30, 32, 34 einzeln bewegbar sind, wie in den Fig. 4 und 5 verdeutlicht wird.

Fig. 4 zeigt einen schematischen Teilquerschnitt im Bereich des Formnests 16 durch das Spritzgießwerkzeug aus Fig. 3 für das Spritzgießen des in den Fig. 1 und 2 dargestellten Werkstücks. Das Spritzgießwerkzeug besteht aus einer ersten Formhälfte 20 und einer zweiten Formhälfte 22. Im Formnest 16 wird das erste bügelförmige Werkstückteil 12 gegossen. Mit 18 ist der Kern zur Formung des Bügels 12 bezeichnet, der gleichzeitig mit dem mittleren Schieberteil 30 eine Trennkante 19 des Formnests 16 definiert. Der Schieberteil 30 wird jedoch beim Gießen des Werkstückteils 12 nicht bewegt. Die beiden äußeren Schieberteile 32, 34 (Fig. 3), die hier nicht zu sehen sind, werden allein betätigt.

Fig. 5 zeigt nun einen Teilschnitt durch die Spritzgießform im Bereich des Formnests 17. In diesem Formnest wird das zweite Werkstückteil 14 an das erste Werkstückteil 12 angegossen. Zum Ausformen der Hinterschneidungen und zum Ausstoßen des Werkstücks sind die drei Schieberteilstücke, nämlich das mittlere Schieberteilstück 30, das erste äußere nicht sichtbare Schieberteilstück 32 und das zweite äußere nicht sichtbare Schieberteilstück 34 vorgesehen.

Die Schieberteilstücke werden jeweils beispielsweise durch Schrägbolzen oder Kernzüge betätigt. In der Zeichnungsfigur 5 ist beispielhaft ein Schrägbolzen 40 dargestellt, der das mittlere Schieberteilstück 30 verschiebend bei der Auf- und Zu-Bewegung der Gießform betätigt. Im Unterschied zu Fig. 4 wird nun das Schieberteilstück 30 durch den nun vorhandenen Schrägbolzen 40 bewegt.

Alle drei Schieberteilstücke bewegen sich in gleichen Bahnen und gleicher Richtung und werden beispielsweise mittels Schrägbolzen 40 bei der Auf- und Zu-Bewegung der Gießform betätigt. Sie können aber auch einzeln über Kernzüge bewegt werden. Beim Spritzen des ersten Werkstückteils 12 gemäß Fig. 4 werden im hier dargestellten Ausführungsbeispiel nur die beiden äußeren Schieberteilstücke 32, 34 eingefahren. Dies kann einfach dadurch erreicht werden, dass das Betätigungsteil, also hier der Schrägbolzen 40, für das mittlere Schieberteilstück 30 weggelassen wird. Nachdem das erste Werkstückteil 12 gespritzt wurde, wird die Spritzgussform um 180° gedreht, wobei das erste Werkstückteil 12 im Formnest verbleibt und mitgedreht wird, wie Fig. 5 zeigt.

Das zweite Formnest 17 ist so gestaltet, dass neben den beiden äußeren Schieberteilstücken 32, 34 nun auch das mittlere Schieberteilstück 30 betätigt wird. Die beiden äußeren Schieberteilstücke 32, 34 werden dabei auch wieder betätigt.

Nachdem das Werkstück 10 fertig gespritzt wurde, fahren alle drei Schieberteilstücke 30, 32, 34 aus und entformen das komplette Werkstück.

## Patentansprüche

1. Spritzgießwerkzeug zum Spritzgießen eines Werkstücks, das aus mehreren Werkstückteilen, die Hinterschnitte (13) aufweisen, besteht, **dadurch gekennzeichnet, dass** das Spritzgießwerkzeug mindestens einen Schieber (29), der in mehrere getrennt betätigbare Teilstücke (30, 32, 34) aufgeteilt ist, zum Formen und Ausstoßen aufweist.

2. Spritzgießwerkzeug nach Anspruch 1, **dadurch gekennzeichnet, dass** es Schrägbolzen (40) aufweist, mit denen die Schieberteilstücke (30, 32, 34) gesteuert betätigt werden können.

3. Spritzgießwerkzeug nach Anspruch 1, **dadurch gekennzeichnet, dass** es Kernzüge aufweist, über die die Schieberteilstücke (30, 32, 34) hydraulisch oder pneumatisch betätigt werden.

4. Spritzgießwerkzeug nach einem der vorherigen Ansprüche, **dadurch gekennzeichnet, dass** die verschiedenen Schieberteilstücke (30, 32, 34) so angeordnet sind, dass sie in Bahnen gleicher Richtung verlaufen.

5. Spritzgießwerkzeug nach einem der vorherigen Ansprüche, **dadurch gekennzeichnet, dass** das Spritzgießwerkzeug zwei Formnester (16, 17) umfasst, die um 180° entgegengesetzt zueinander angeordnet sind.

6. Spritzgießwerkzeug nach Anspruch 5, **dadurch gekennzeichnet, dass** die Formnester (16, 17) unterschiedliche Schrägbolzen (40) bzw. Kernzüge aufweisen, sodass im jeweiligen Formnest (16, 17) unterschiedliche Schieberteilstücke (30, 32, 34) betätigt werden können.

7. Verfahren zum Spritzgießen eines Werkstücks, das aus mehreren mit Hinterschneidungen (13) versehenen Werkstückteilen (12, 14) besteht, mit einem Spritzgießwerkzeug nach einem der obigen Ansprüche, **dadurch gekennzeichnet, dass** in einem ersten Formnest (16) der Spritzgussform ein erstes Werkstückteil (12) gegossen, die Spritzgussform bis zu einem zweiten Formnest (17) bewegt, und dann ein zweites Werkstückteil (14) an das erste Werkstückteil (12) angespritzt, und dieser Vorgang für weitere Formnester und weitere Werkstückteile entsprechend fortgesetzt wird.

8. Verfahren nach Anspruch 7, **dadurch gekennzeichnet, dass** zum Spritzgießen eines Werkstücks, das aus zwei einander entgegengesetzten Werkstückteilen (12, 14) besteht, die Bewegung der Spritzgussform aus einer Drehung um 180° besteht.

9. Verfahren nach Anspruch 7 oder 8, **dadurch gekennzeichnet, dass** nachdem das erste Werkstückteil (12) gegossen wurde, dieser mittels eines oder mehreren Schieberteilstücken (32, 34) ausgestoßen wird aber dennoch im Formnest (16) liegen bleibt, sodass es mit der Bewegung der Spritzgussform mitgeführt werden kann, und dass nach dem Gießen des zweiten Werkstückteils (14) das Werkstück mittels mindestens eines anderen Schieberteilstücks (30) aus der Spritzgussform ausgestoßen wird.

10. Verfahren nach einem der Ansprüche 7 bis 9, **dadurch gekennzeichnet, dass** zum Spritzen des ersten Werkstückteils (12) ein anderer Werkstoff als zum Spritzen des zweiten Werkstückteils (14) verwendet wird.
